# EUROPÄISCHE PATENTANMELDUNG

(11) **EP 1 260 917 A2**
(43) Veröffentlichungstag der Anmeldung: **27.11.2002**
(21) Anmeldenummer: 02010538.3
(22) Anmeldetag: 10.05.2002
(51) Int. Cl.: G06F 17/30

(54) **Verfahren zur Suche nach Inhalten eines Rechnernetzwerks**

(30) Priorität: 16.05.2001 DE 10123773
(71) Anmelder: ALCATEL, 75008 Paris (FR)
(72) Erfinder: Eisinger, Bernd, 3744 Stockern (AT)
(74) Vertreter: Dreiss, Fuhlendorf, Steimle & Becker

(57) **Zusammenfassung**

Die Erfindung betrifft ein Verfahren zum Betreiben eines Rechners (1) eines Rechnernetzwerks (2), bei dem von einem Benutzer (5) ein Suchkriterium einer Suche nach Inhalten (11) des Rechnernetzwerks (2) eingegeben wird, die Suche ausgeführt wird und die im Rahmen der Suche gefundenen Inhalte (11) an den Benutzer (5) ausgegeben werden. Um eine möglichst benutzerindividuelle Ausgabe der Inhalte (11) des Rechnernetzwerks (2) zu ermöglichen, wird vorgeschlagen, dass
- ein dem Benutzer (5) zugeordnetes Benutzerprofil aufgerufen wird, das abhängig ist von Suchkriterien (7), die der Benutzer (5) in vorangegangenen Suchen benutzt hat;
- die gefundenen Inhalte (11) unter Berücksichtigung des Benutzerprofils ausgegeben werden, und
- das Suchkriterium (7) der aktuellen Suche automatisch zur Aktualisierung des Benutzerprofils herangezogen wird.

## Beschreibung

Die vorliegende Erfindung betrifft ein Verfahren zum Betreiben eines Rechners eines Rechnernetzwerks. Bei dem Verfahren wird von einem Benutzer ein Suchkriterium einer Suche nach Inhalten des Rechnernetzwerks eingegeben. Die Suche wird ausgeführt und die im Rahmen der Suche gefundenen Inhalte werden an den Benutzer ausgegeben.

Die Erfindung betrifft außerdem ein Verfahren zur Suche nach Inhalten eines Rechnernetzwerks anhand eines von einem Benutzer eingegebenen Suchkriteriums. Bei dem Verfahren wird die Suche ausgeführt und die im Rahmen der Suche gefundenen Inhalte werden über den Rechner an den Benutzer ausgegeben.

Schließlich betrifft die vorliegende Erfindung auch einen Rechner eines Rechnernetzwerks, der zum Durchführen einer Suche nach Inhalten des Rechnernetzwerks anhand eines von einem Benutzer eingegebenen Suchkriteriums und zur Ausgabe der im Rahmen der Suche gefundenen Inhalte dient.

Aus dem Stand der Technik ist das Internet als ein weltumspannendes Rechnernetzwerk bekannt. Das Internet weist eine Vielzahl von Rechnern auf, die als Internetserver ausgebildet sind und auf denen eine Vielzahl unterschiedlicher Inhalte abgelegt ist. Die Inhalte sind bspw. Informationen, Angebote, Computerprogramme, digitale Audio- oder Videodaten. Um aus der Vielfalt an Inhalten bestimmte Inhalte gezielt zu finden, werden nach dem Stand der Technik sog. Suchmaschinen eingesetzt. Bekannte Suchmaschinen sind bspw. Altavista (http://www.altavista.com), Yahoo (http://www.yahoo.com), Excite (http://www.excite.de) oder Google (http://www.google.com).

Zur Suche nach Inhalten des Internet wird ein bestimmtes Suchkriterium von einem Benutzer an eine Suchmaschine übergeben. Die Suchmaschine durchsucht einen Großteil des Internets nach den gesuchten Inhalten, sortiert die gefundenen Inhalte in einer bestimmten Reihenfolge und gibt die sortierten Inhalte dann an den Benutzer aus. Die einzelnen Suchmaschinen unterscheiden sich unter anderem in ihrer Suchstrategie, d. h. wie das Internet durchsucht wird und welche Inhalte bei der Suche berücksichtigt werden, und in der Reihenfolge, in der die gefundenen Inhalte ausgegeben werden. Während bei Altavista oder Jahoo die Anzahl der Treffer und die Fundstelle der Treffer (ob in der Überschrift oder im Fließtext eines Dokuments) entscheidende Kriterien für die Reihenfolge sind, wird bei Google die Reihenfolge hauptsächlich durch die Anzahl der Verweise auf den gefundenen Inhalt (Internetseite) von anderen Inhalten (Internetseiten) aus bestimmt.

Auch im Bereich des Anbietens und Verkaufs von Waren oder Dienstleistungen (sog. electronic Commerce oder e-Commerce) wird das Internet bzw. werden verschiedene Internetseiten des Anbieters anhand eines von dem Benutzer eingegebenen Suchkriteriums durchsucht und die gefundenen Waren oder Dienstleistungen werden in einer bestimmten Reihenfolge angezeigt. Die Reihenfolge der angezeigten Waren oder Dienstleistungen ergibt sich bei einer Suche mit einer herkömmlichen Suchmaschine nach den Ausgabekriterien der jeweiligen Suchmaschine. Bei einer Suche nach Waren oder Dienstleistungen innerhalb der Internetseiten eines bestimmten Anbieters ergibt sich die Reihenfolge der ausgegebenen Waren oder Dienstleistungen anhand von anbieterindividuellen Ausgabekriterien.

Sowohl bei den bekannten Suchmaschinen als auch bei den bekannten e-Commerce-Anwendungen werden die gefundenen Inhalte also nicht benutzerindividuell ausgegeben. Infolgedessen kann es vorkommen, dass zu Beginn der Ausgabereihenfolge häufig Inhalte ausgegeben werden, die für den Benutzer lediglich von geringem Interesse sind, wohingegen die für den Benutzer besonders relevanten Inhalte erst weiter hinten in der Reihenfolge oder sogar gar nicht ausgegeben werden.

Ein erster Schritt in Richtung benutzerindividuelle Ausgabe von gefundenen Inhalten bei e-Commerce-Anwendungen stellt das sog. Datamining dar. Beim Datamining wird das Einkaufsverhalten eines Benutzers analysiert und daraus ein dem Benutzer zugeordnetes Einkaufsprofil erstellt. Das durch das Datamining erstellte Einkaufsprofil beschränkt sich in der Regel jedoch darauf, aus den Einkaufsgewohnheiten des Benutzers unmittelbar Änderungen oder Aktualisierungen des Einkaufsprofils vorzunehmen. Wenn der Benutzer bspw. ständig Sonderangebote wählt, wird dies als Indiz für sein Interesse an billigen Waren oder Dienstleistungen gewertet. Dies wird in dem Einkaufsprofil vermerkt, und die gesuchten Waren oder Dienstleistungen werden dem Benutzer dann in einer Reihenfolge von billigeren Waren oder Dienstleistungen zu teureren Waren oder Dienstleistungen hin angezeigt. Zusammenfassend kann gesagt werden, dass beim Datamining nur dasjenige Verhalten eines Benutzers analysisert wird, das durch sein Bewusstsein und nicht durch sein Unterbewusstsein gesteuert wird. Das Einkaufsverhalten eines Benutzers wird mit dem Ziel ausgewertet, sein zukünftiges Einkaufsverhalten zu beeinflussen. Zwischen den ausgewerteten Informationen und der Art und der Reihenfolge der ausgegebenen Inhalte besteht also ein direkter Zusammenhang.

Der vorliegenden Erfindung liegt die Aufgabe zugrunde, Inhalte eines Rechnernetzwerks besser benutzerindividuell ausgeben zu können.

Zur Lösung dieser Aufgabe schlägt die Erfindung ausgehend von dem Verfahren zum Betreiben eines Rechners eines Rechnernetzwerks der eingangs genannten Art vor,
- dass ein dem Benutzer zugeordnetes Benutzerprofil aufgerufen wird, wobei das Benutzerprofil abhängig ist von den von dem Benutzer in vorangegangenen Suchen benutzten Suchkriterien;
- die gefundenen Inhalte unter Berücksichtigung des Benutzerprofils ausgegeben werden;
- das Suchkriterium der aktuellen Suche automatisch zur Aktualisierung des Benutzerprofils herangezogen wird.

Gemäß der vorliegenden Erfindung wird also nicht einfach das Einkaufsverhalten eines Benutzers zur Ermittlung eines Einkaufsprofils herangezogen. Vielmehr wird das Verhalten des Benutzers beim Zugriff auf die Inhalte des Rechnernetzwerkes, das sog. Surfverhalten des Benutzers, zur Ermittlung des Benutzerprofils herangezogen. In dem Benutzerprofil ist nicht nur das Einkaufsverhalten des Benutzers beschränkt auf e-Commerce-Anwendungen abgelegt, sondern ganz allgemein das Verhalten des Benutzers in dem Rechnernetzwerk, z. B. die aufgerufenen Inhalte und die Verweilzeit bei bestimmten Inhalten, abgelegt. Aus dem allgemeinen Surfverhalten des Benutzers können dann durch geeignete Querverbindungen und Querverweise zwischen den einzelnen Verhaltensmerkmalen des Benutzers Kriterien zur Ausgabe von beliebigen Inhalten des Rechnernetzwerks ermittelt werden.

Durch das erfindungsgemäße Verfahren kann das Benutzerprofil wesentlich detaillierter und zuverlässiger bestimmt werden. Das wiederum erlaubt eine benutzerindividuelle Ausgabe der Informationen in Art und Reihenfolge hochrelevant für den Benutzer. Insbesondere der Bereich des elektronischen Anbietens und Verkaufens über das Internet (e-Commerce) kann durch die vorliegende Erfindung wesentlich effizienter gestaltet werden, da dem Benutzer in erster Linie diejenigen Angebote präsentiert werden, die ihn auch wirklich interessieren.

Die Eingabe eines Suchkriteriums umfasst auch die Eingabe einer Internet Protocol (IP)-Adresse einer bestimmten Internetseite über einen sog. Browser. Dabei werden die auszugebenden Inhalte nicht durch eine Suchmaschine, sondern durch direkte Anwahl der entsprechenden Internetseite ermittelt. Die Eingabe eines Suchkriteriums umfasst auch die Anwahl weiterer Internetseiten über Querverbindungen (sog. Hyperlinks) von einer ersten Internetseite auf die weiteren Internetseiten. Da das Surfverhalten eines Benutzer durch die von ihm eingegebenen Suchkriterien einer rechnernetzwerkweiten Suche nach bestimmten Inhalten des Rechnernetzwerks charakterisiert wird, kann anhand der Suchkriterien des Benutzers ein besonders zuverlässiges Benutzerprofil erstellt werden.

Gemäß einer vorteilhaften Weiterbildung der vorliegenden Erfindung wird vorgeschlagen, dass das Benutzerprofil in Abhängigkeit von durch den Benutzer angewählten Inhalten des Rechnernetzwerks aktualisiert wird. Zusätzlich zu den Suchkriterien, die der Benutzer eingibt, können noch weitere Aspekte seines Surfverhaltens berücksichtigt werden wie bspw. die Frage, welche Inhalte des Rechnernetzwerks der Benutzer anwählt und wie lange er bei den verschiedenen Inhalten verweilt. Die Frage nach der Art der angewählten Inhalte kann beliebig detailliert beantwortet werden. Je genauer die angewählten Inhalte analysiert werden, desto detailierter kann das Benutzerprofil erstellt werden. So lässt sich bspw. ein besonders genaues Benutzerprofil eines Benutzers erstellen, wenn nicht nur bekannt ist, dass der Benutzer im Durchschnitt eine bestimmte Zeit lang aktuelle Nachrichten betrachtet, sondern wenn zusätzlich noch bekannt ist, dass der Benutzer während dieser Zeit hauptsächlich Wirtschaftsnachrichten betrachtet.

Gemäß einer bevorzugten Ausführungsform der vorliegenden Erfindung wird vorgeschlagen, dass von den gefundenen Inhalten lediglich ausgewählte Inhalte ausgegeben werden, wobei die auszugebenden Inhalte in Abhängigkeit von dem Benutzerprofil ausgewählt werden. Des.Weiteren wird vorgeschlagenen, dass die gefundenen Inhalte in einer Reihenfolge ausgegeben werden, die in Abhängigkeit von dem Benutzerprofil bestimmt wird. Über das Benutzerprofil wird also insbesondere die Art und die Reihenfolge der auszugebenden Inhalte benutzerindividuell eingestellt.

Gemäß einer anderen vorteilhaften Weiterbildung der vorliegenden Erfindung wird vorgeschlagen, dass die Suche nach Inhalten des Rechnernetzwerks über den Rechner von einem Zugangsportal zu dem Rechnernetzwerk aus erfolgt. Ein Zugangsportal ist bspw. eine bestimmte Internet-Startseite, auf der verschiedene Angebote und Querverweise (Hyperlinks) zu weiteren Internetseiten enthalten sind. Zur Identifikation des Benutzers gibt dieser zu Beginn ein Passwort ein. Alternativ kann der Benutzer auch anhand einer automatisch übermittelten Kennung (Telefonnummer des Anrufenden bei ISDN, sog. CLIP-Funktion) identifiziert werden. Dem Zugangsportal unterlagert ist eine geeignete Vorrichtung zur Analyse der Surf-Gewohnheiten des Benutzers und insbesondere zur Analyse der von dem Benutzer eingegebenen Suchkriterien vorgesehen sein. Die Vorrichtung ist bspw. als ein Computerprogramm ausgebildet. Die Auswahl eines bestimmten Angebots oder eines bestimmten Verweises zu anderen Inhalten von dem Zugangsportal aus wird von dem Analyseprogramm zur Aktualisierung des Benutzerprofils herangezogen. Ebenso werden Informationen über die von dem Benutzer angewählten Inhalte des Rechnernetzwerks und die Verweildauer bei den Inhalten von dem Computerprogramm analysiert.

Das Benutzerprofil umfasst vorteilhafterweise mehrere Verhaltensmerkmale, die jeweils ein bestimmtes Verhalten des Benutzers kennzeichnen. Ein Verhaltensmerkmal ist bspw. das Preisbewusstsein des Benutzers. Das Preisbewusstsein des Benutzers kann noch einmal in verschiedene Waren oder Dienstleistungen oder Waren- oder Dienstleistungsgruppen unterteilt sein. So wäre es bspw. denkbar, dass ein Benutzer bei Lebensmitteln ein hohes Preisbewusstsein an den Tag legt, wohingegen er bei Kleidung sehr wenig preisbewusst ist, d. h. stark markenbewusst ist.

Das Suchkriterium der aktuellen Suche wird gemäß einer bevorzugten Ausführungsform unmittelbar zur Aktualisierung mindestens eines Verhaltensmerkmals des Benutzerprofils herangezogen. So kann bspw. aus eingekauften Waren oder Dienstleistungen unmittelbar auf das Preisbewusstsein des Benutzers geschlossen werden. Das Preisbewusstsein kann bspw. unterteilt sein in "Niederpreis", "Sonderangebote", "gute Qualität zu angemessenen Preisen" oder "Markenbewusstsein".

Alternativ oder zusätzlich kann mindestens ein weiteres Verhaltensmerkmal des Benutzerprofils zur Aktualisierung mindestens eines Verhaltensmerkmals des Benutzerprofils herangezogen werden. Gemäß dieser Ausführungsform sind die Verhaltensmerkmale also untereinander durch Querverbindung oder Querverweise vernetzt und beeinflussen sich gegenseitig. So kann das Sozialverhalten des Benutzers bspw. anhand der Verhaltensmerkmale "preisbezogene Interessen" und "Finanznachricht-Interessen" u. a. ermittelt werden.

Als eine weitere Lösung der Aufgabe der vorliegenden Erfindung wird ausgehend von dem Verfahren zur Suche nach Inhalten eines Rechnernetzwerks der eingangs genannten Art vorgeschlagen, dass
- ein dem Benutzer zugeordnetes Benutzerprofil aufgerufen wird, wobei das Benutzerprofil abhängig ist von den von dem Benutzer in vorangegangenen Suchen benutzten Suchkriterien;
- die gefundenen Inhalte unter Berücksichtung des Benutzerprofils ausgegeben werden; und
- das Suchkriterium der aktuellen Suche automatisch zur Aktualisierung des Benutzerprofils herangezogen wird.

Als noch eine weitere Lösung der vorliegenden Erfindung wird ausgehend von dem Rechner eines Rechnernetzwerks der eingangs genannten Art vorgeschlagen, dass der Rechner
- Zugriff auf ein dem Benutzer zugeordnetes Benutzerprofil hat, das abhängig ist von den von Suchkriterien, die der Benutzer in vorangegangenen Suchen benutzt hat;
- Mittel zur Ausgabe der gefundenen Inhalte unter Berücksichtigung des Benutzerprofils; und
- Mittel zur automatischen Aktualisierung des Benutzerprofils in Abhängigkeit des Suchkriteriums der aktuellen Suche hat.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

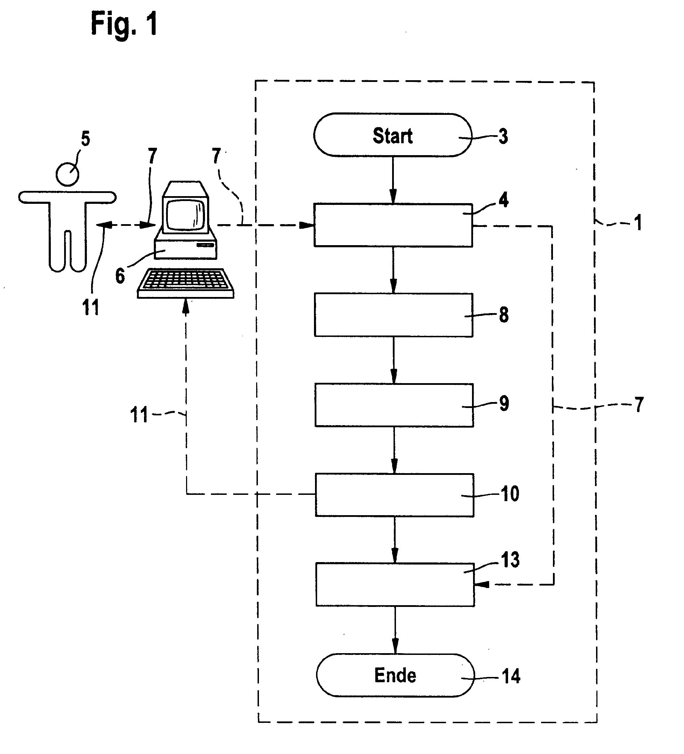

- Figur 1: ein Ablaufdiagramm eines erfindungsgemäßen Verfahrens zum Betreiben eines Rechners eines Rechnernetzwerks; und

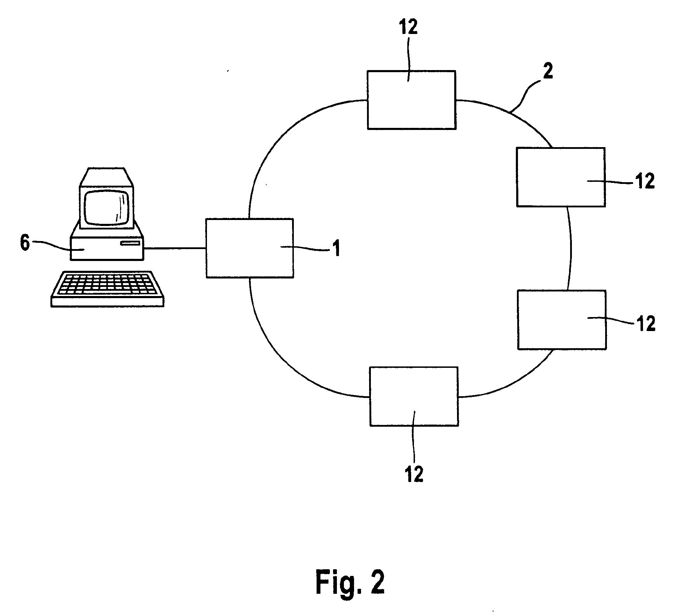

- Figur 2: ein Rechnernetzwerk mit einem erfindungsgemäßen Rechner.

Das erfindungsgemäße Verfahren läuft auf einem Rechner 1 eines Rechnernetzwerkes 2, bspw. des Internets, ab. Das erfindungsgemäße Verfahren dient zum Betreiben des Rechners 1 mit dem Ziel, die Suche nach Inhalten des Rechnernetzwerks 2 zu verbessern. Das erfindungsgemäße Verfahren beginnt in einem Funktionsblock 3. In einem Funktionsblock 4 werden von einem Benutzer 5 über einen Rechner 6 Suchkriterien 7 für die Suche eingegeben.

Anschließend wird in einem Funktionsblock 8 die gewünschte Suche ausgeführt. Falls bspw. nach Internetseiten mit einem bestimmten Inhalt gesucht wird, kann die Suche aus Funktionsblock 8 bspw. mit einer herkömmlichen Suchmaschine ausgeführt werden. Es ist jedoch auch denkbar, dass in dem Funktionsblock 4 eine herkömmliche IP (Internet Protocol)-Adresse einer Internetseite eingegeben wird und dass die Suche aus dem Funktionsblock 8 lediglich den Aufruf der gewünschten Internetseite umfasst.

Erfindungsgemäß wird in einem Funktionsblock 9 ein Benutzerprofil aufgerufen, das abhängig ist von den Suchkriterien 7, die von dem Benutzer 5 in vorangegangenen Suchen benutzt wurden. Das Benutzerprofil umfasst mehrere Verhaltensmerkmale, die jeweils ein bestimmtes Verhalten des Benutzers kennzeichnen. Als Verhaltensmerkmale werden nicht nur von außen unmittelbar beeinflussbare Merkmale, wie bspw. das Einkaufsverhalten des Benutzers, sondern auch solche Merkmale herangezogen, die von außen nicht unmittelbar beeinflussbar sind, wie bspw. das Sozialverhalten des Benutzers 5. Die Verhaltensmerkmale sind noch einmal in vier Kategorien unterteilt. So ist bspw. das Verhaltensmerkmal "Preisbewusstsein" in die Kategorien "Niedrigpreise", "Sonderangebote", "gute Qualität zum angemessenen Preis" und "Markenbewusstsein" unterteilt. Ebenso ist bspw. das Verhaltensmerkmal "Sozialverhalten" unterteilt in die Kategorien "preisbezogene Interessen", "Interessen an Finanznachrichten" u.a.

In einem Funktionsblock 10 des erfindungsgemäßen Verfahrens werden die im Rahmen der in Funktionsblock 8 ausgeführten Suche gefundenen Inhalte unter Berücksichtigung des in Funktionsblock 9 aufgerufenen Benutzerprofils ausgegeben. Zur Ausgabe der Inhalte 11 können diese entweder auf einem Bildschirm des Rechners 6 dargestellt, auf einem an den Rechner 6 angeschlossenen Drucker ausgedruckt oder auf andere Weise ausgegeben werden. Es ist denkbar, zur Ausgabe der Inhalte 11 diese auf Datenträgern (bspw. auf Disketten) abzuspeichern oder über das Rechnernetzwerk 2 an andere Rechner 12 des Rechnernetzwerks zu übertragen und dort abzuspeichern. Von den gefundenen Inhalten werden lediglich ausgewählte Inhalte 11 ausgegeben, wobei die auszugebenden Inhalte 11 in Abhängigkeit von dem Benutzerprofil ausgewählt werden. Ebenso können die gefundenen Inhalte 11 in einer bestimmten Reihenfolge ausgegeben werden, die in Abhängigkeit von dem Benutzerprofil bestimmt wird.

In einem Funktionsblock 13 wird das Benutzerprofil anhand der Suchkriterien 7 der aktuellen Suche automatisch aktualisiert. Dazu können die Suchkriterien 7 der aktuellen Suche direkt zur Aktualisierung mindestens eines Verhaltensmerkmals des Benutzerprofils herangezogen werden. Ebenso kann mindestens ein Verhaltensmerkmal des Benutzerprofils anhand mindestens eines weiteren Verhaltensmerkmals aktualisiert werden. Das bedeutet, dass die einzelnen Verhaltensmerkmale des Benutzerprofils untereinander in einer Wirkverbindung stehen und sich gegenseitig beeinflussen können. Im Rahmen der Aktualisierung des Benutzerprofils können auch neue Verhaltensmerkmale generiert werden, so dass sich in dem Benutzerprofil mit der Zeit ein umfangreiches und detailliertes Abbild des Benutzers 5 bzw. seiner Eigenschaften ergibt. In einem Funktionsblock 14 ist das erfindungsgemäße Verfahren beendet.

Aus Datenschutzgründen sollte sichergestellt werden, dass ein Benutzerprofil nicht in unberechtigte Hände gelangt. Das Benutzerprofil sollte nur von Personen oder Firmen genutzt werden dürfen, denen der Benutzer 5 seine ausdrückliche Zustimmung erklärt hat. Das Benutzerprofil sollte für den Benutzer 5 jederzeit zugänglich und einsehbar, für andere Nutzer des Rechnernetzwerks 2 jedoch nicht einsehbar, abgelegt sein. Der Benutzer 5 sollte die Möglichkeit haben, seine Zustimmung zur Nutzung des Benutzerprofils im Nachhinein zu widerrufen, d. h. das gesamte Benutzerprofil oder einzelne Verhaltensmerkmale des Benutzerprofils sperren zu können. Das Benutzerprofil bzw. einzelne Verhaltensmerkmale sollten dann gelöscht werden und eine Aktualisierung des Benutzerprofils sollte nicht mehr stattfinden.

Zur Aktualisierung des Benutzerprofils ist den Inhalten des Rechnernetzwerks 2 ein einem oder mehreren Verhaltensmerkmalen entsprechender Profilparameter zugeordnet. Über die einzelnen Inhalte sind elektronische Meilensteine verteilt. Wenn ein Meilenstein überschritten wird, bspw. im Rahmen der Nutzung einer Anwendung des Rechnernetzwerks 2, wird die Kategorie des entsprechenden Verhaltensmerkmals um einen vorgebbaren Wert erhöht oder erniedrigt.

Die benutzerindividuelle Ausgabe der Inhalte 11 kann dadurch erreicht werden, dass den Inhalten des Rechnernetzwerks 2, d. h. Informationen, Angeboten u.a., zusätzliche Informationen in Form von Profilinformationen zugeordnet sind, die Benutzer-Zielgruppen definieren, für die die speziellen Informationen oder Angebote von besonderer Bedeutung sind. Als Profilinformationen können den Informationen oder Angeboten bestimmte Kategorien von Verhaltensmerkmalen eines Benutzerprofils zugeordnet werden. Es werden dann diejenigen Inhalte 11 ausgegeben, deren Verhaltensmerkmale den Verhaltensmerkmalen des Benutzers am nächsten kommen, vorzugsweise mit diesen übereinstimmen.

## Patentansprüche

1. Verfahren zum Betreiben eines Rechners (1) eines Rechnernetzwerks (2), bei dem von einem Benutzer (5) ein Suchkriterium (7) einer Suche nach Inhalten (11) des Rechnernetzwerks (2) eingegeben wird, die Suche ausgeführt wird und die im Rahmen der Suche gefundenen Inhalte (11) an den Benutzer (5) ausgegeben werden, **dadurch gekennzeichnet, dass**
- ein dem Benutzer (5) zugeordnetes Benutzerprofil aufgerufen wird, wobei das Benutzerprofil abhängig ist von den von dem Benutzer (5) in vorangegangenen Suchen benutzten Suchkriterien;
- die gefundenen Inhalte unter Berücksichtigung des Benutzerprofils ausgegeben werden; und
- das Suchkriterium der aktuellen Suche automatisch zur Aktualisierung des Benutzerprofils herangezogen wird.

2. Verfahren nach Anspruch 1, **dadurch gekennzeichnet, dass** das Benutzerprofil in Abhängigkeit von durch den Benutzer (5) angewählten Inhalten des Rechnernetzwerks (2) aktualisiert wird.

3. Verfahren nach Anspruch 1 oder 2, **dadurch gekennzeichnet, dass** von den gefundenen Inhalten lediglich ausgewählte Inhalte (11) ausgegeben werden, wobei die auszugebenen Inhalte (11) in Abhängigkeit von dem Benutzerprofil ausgewählt werden.

4. Verfahren nach einem der Ansprüche 1 bis 3, **dadurch gekennzeichnet, dass** die gefundenen Inhalte (11) in einer Reihenfolge ausgegeben werden, die in Abhängigkeit von dem Benutzerprofil bestimmt wird.

5. Verfahren nach einem der Ansprüche 1 bis 4, **dadurch gekennzeichnet, dass** die Suche nach Inhalten (11) des Rechnernetzwerks (2) über den Rechner (1) von einem Zugangsportal zu dem Rechnernetzwerk (2) aus erfolgt.

6. Verfahren nach einem der Ansprüche 1 bis 5, **dadurch gekennzeichnet, dass** das Benutzerprofil mehrere Verhaltensmerkmale umfasst, die jeweils ein bestimmtes Verhalten des Benutzers (5) kennzeichnen.

7. Verfahren nach Anspruch 6, **dadurch gekennzeichnet, dass** das Suchkriterium der aktuellen Suche unmittelbar zur Aktualisierung mindestens eines Verhaltensmerkmals des Benutzerprofils herangezogen wird.

8. Verfahren nach Anspruch 6, **dadurch gekennzeichnet, dass** mindestens ein weiteres Verhaltensmerkmal des Benutzerprofils zur Aktualisierung mindestens eines Verhaltensmerkmals des Benutzerprofils herangezogen wird.

9. Verfahren zur Suche nach Inhalten (11) eines Rechnernetzwerks (2) anhand eines von einem Benutzer (5) eingegebenen Suchkriteriums (7), bei dem die Suche ausgeführt wird und die im Rahmen der Suche gefundenen Inhalte (11) an den Benutzer (5) ausgegeben werden, **dadurch gekennzeichnet, dass**
- ein dem Benutzer (5) zugeordnetes Benutzerprofil aufgerufen wird, wobei das Benutzerprofil abhängig ist von den von dem Benutzer (5) in vorangegangenen Suchen benutzten Suchkriterien;
- die gefundenen Inhalte unter Berücksichtigung des Benutzerprofils ausgegeben werden; und
- das Suchkriterium der aktuellen Suche automatisch zur Aktualisierung des Benutzerprofils herangezogen wird.

10. Rechner (1) eines Rechnernetzwerks (2), zum Durchführen einer Suche nach Inhalten (11) des Rechnernetzwerks (2) anhand eines von einem Benutzer (5) eingegebenen Suchkriteriums (7) und zur Ausgabe von im Rahmen der Suche gefundenen Inhalten (11), **dadurch gekennzeichnet, dass** der Rechner (1)
- Zugriff auf ein dem Benutzer (5) zugeordnetes Benutzerprofil hat, das abhängig ist von Suchkriterien (7), die der Benutzer (5) in vorangegangenen Suchen benutzt hat;
- Mittel zur Ausgabe der gefundenen Inhalte (11) unter Berücksichtigung des Benutzerprofils; und
- Mittel zur automatischen Aktualisierung des Benutzerprofils in Abhängigkeit des Suchkriteriums der aktuellen Suche hat.
